# EUROPÄISCHE PATENTANMELDUNG

(11) **EP 0 667 596 A1**
(43) Veröffentlichungstag der Anmeldung: **16.08.1995**
(21) Anmeldenummer: 94250027.3
(22) Anmeldetag: 10.02.1994
(51) Int. Cl.: G06T 11/20

(54) **Verfahren zur Text- und Graphikdarstellung auf Farbbildschirmgeräten**

(71) Anmelder: ADOBE SYSTEMS INCORPORATED, Mountain View California 94039-7900 (US)
(72) Erfinder: Karow, Peter Dr., 22399 Hamburg (DE)
(74) Vertreter: UEXKÜLL & STOLBERG

(57) **Zusammenfassung**

Die Erfindung betrifft ein Verfahren zur Text- und Graphikdarstellung auf einem Farbbildschirmgerät, welches ein Bildschirmraster mit einer vorgegebenen Anzahl von Bildpunkten in x- und y-Richtung und einen Bildwiederholspeicher mit einer Bittiefe von i Bit aufweist, wobei die darzustellenden Zeichen in Konturformat aus einem Speicher geladen werden und die auf der Kontur jedes Zeichens liegenden Rasterpunkte mittels eines Rasterverfahren ermittelt werden. Erfindungsgemäß wird zur Erreichung einer besseren Bildqualität eine Helligkeitsabstufung vorgenommen, indem die Rasterung und Berechnung der Zeichenpositionen zeichenweise in einem Feinraster vorgenommen wird, in welchem jeder Bildpunkt des Bildschirmrasters in x-Richtung in m und in y-Richtung in n Feinraster-Bildpunkte unterteilt ist, wobei m, n natürliche Zahlen größer 1 sind und m x n ≦ i ist, und jedes einzelne Zeichen in dem Feinraster in eine Bitmap-Kodierung gewandelt wird; es werden jeweils die Bitwerte der m x n Feinraster-Bildpunkte in jedem Bildschirmraster-Bildpunkt jedes Zeichens als Bitfolge auf den Speicherplatz des jeweiligen Bildschirmraster-Bildpunktes in dem Bildwiederholspeicher geschrieben und zur Bilddarstellung jeder Speicherplatz des Bildwiederholspeichers ausgelesen und dem jeweiligen Bildschirmraster-Bildpunkt ein von der Summe der Bitwerte der ausgelesenen Bitfolge abhängiger Grauwert zugewiesen und mit dem Grauwert entsprechender Intensität auf dem Bildschirm zur Anzeige gebracht.

## Beschreibung

Die Erfindung betrifft ein Verfahren zur Text-und Graphikdarstellung auf einem Farbildschirmgerät, welches ein Bildschirmraster mit einer vorgegebenen Anzahl von Bildpunkten in x- und y-Richtung und einen Bildwiederholspeicher mit einer Bittiefe von i Bit pro Bildschirmraster-Bildpunkt aufweist, wobei die darzustellenden Zeichen (Buchstaben, verwandte grafische Elemente und Strichzeichnungselemente) in Konturformat aus einem Speicher geladen werden, passend zu den Text/Bild-Anforderungen skaliert, gedreht und positioniert werden, und wobei die auf der Kontur jedes Zeichens liegenden Rasterpunkte mittels eines Rasterverfahren ermittelt werden (grid walk).

Bildschirmgeräte stellen Schriftzeichen und anderen Graphiken gerastert dar. Üblicherweise wird die Bildfläche mit etwa 500 bis 1000 Fernsehzeilen beschrieben, die jeweils aus etwa 600 bis 1200 Bildpunkten (Pixel) bestehen. Ohne Einschränkung der Allgemeinheit wird im folgenden die Länge der Bildpunkte (x-Richtung) als derart eingestellt angenommen, daß sie dem Zeilenabstand (y-Richtung) entspricht und man dadurch quadratische Bildpunkte erhält. Jedem Bildpunkt lassen sich beliebige Farbwerte zuordnen, d.h. Abstufungen der Helligkeiten der einzelnen Farben Rot, Grün und Blau; Texte und Graphiken (z.B. CAD) werden auf Bildschirmgeräten häufig in Schwarzweiß-Darstellung angezeigt, den Farbwerten entsprechen in diesem Fall abgestufte Grauwerte zwischen weiß und schwarz, die durch gleichmäßiges Erregen der Farbzentren für Rot, Grün und Blau mit einer dem gewünschten Grauwert (Helligkeit) entsprechenden Intensität erzeugt werden. Im folgenden wird zur begrifflichen Vereinfachung die Schwarzweiß-Darstellung mit Abstufungen in Grauwerten stellvertretend für eine beliebige Farbe mit Abstufungen in dem jeweiligen Farbhelligkeitswert betrachtet; der Begriff Grauwert wird insofern in der Bedeutung von Farbhelligkeitswert gebraucht.

Üblicherweise sind heute Personalcomputer, Prozeßrechner wie auch Mainframe-Computer mit Farbbildschirmgeräten zur Kommunikation und Sichtkontrolle ausgerüstet. Die Bildschirmdarstellung wird in dem Bildschirmgerät durch eine spezielle elektronische Schaltung (Graphikboard) in Verbindung mit einem spezifischen Treiberprogramm gesteuert. Das Graphikboard enthält u.a. einen Bildwiederholspeicher, in dem für jeden Bildschirmraster-Bildpunkt ein Speicherplatz vorgesehen ist, der bei Farbbildschirmen eine Tiefe von mehreren Bit zur Kodierung der Farbe hat. Die im Bildwiederholspeicher abgelegte Information wird periodisch in der Bildwiederholfrequenz - zum Beispiel 60 oder 72 Hz - ausgelesen und die digitale Farbinformation zur analogen Steuerung für die Ablenkung und Intensität der drei Elektronenstrahlen für rote, grüne und blaue Farbsignale gewandelt. In dem Bildwiederholspeicher hat der Speicherplatz für einen Bildpunkt eine Tiefe von gewöhnlich 16 Bit, 24 Bit, 32 Bit oder mehr zur Kodierung der Farbe des Bildpunkts. Üblicherweise wird die Farbe durch Helligkeitswerte für die drei Grundfarben des Fernsehens Rot, Grün und Blau (RGB) kodiert. Im Mittel entfallen bei 16 Bit Kodierung auf Rot, Grün und Blau je 5 Bit, also 32 Farbhelligkeitswerte oder -abstufungen. Es ist ferner bekannt, daß man die Kodierung der Farben variierbar gestalten, also z.B. 5 Bit für Grautöne oder 10 Bit für Grüntöne reservieren kann. Ferner kann man die Farbwerte z.B. in Druckerfarben (gelb, magenta, cyan und schwarz, YMCK) speichern und über Umkodierung durch Tabellen für entsprechende RGB-Werte sorgen. Solche Kodierungstabellen werden mit dem englischen Begriff Lookup-table (LUT) bezeichnet.

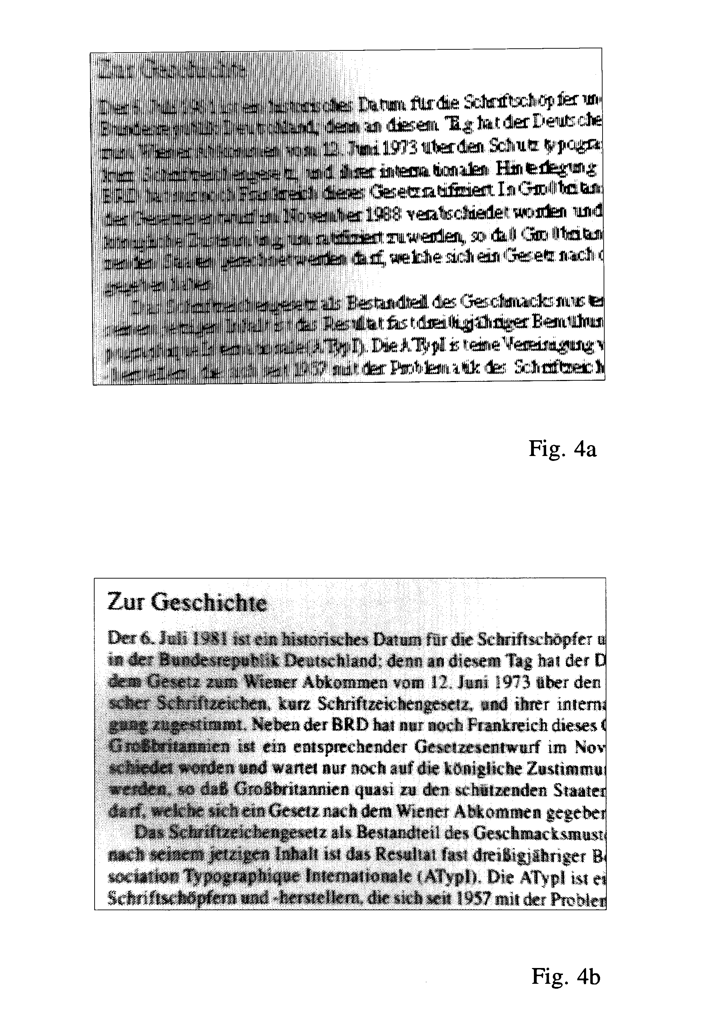

Wenn man die Qualität der Farbbildwiedergabe auf Farbbildschirmen der von Farblaserdruckern gegenüberstellt, erscheint einem die Darstellungsqualität der Bilder etwa vergleichbar. Wenn man allerdings die Qualität von schwarzweißen Textdarstellungen auf Bildschirmen mit derjenigen auf Laserdruckern vergleicht, fällt ein weitaus deutlicherer Unterschied in der Qualität auf. Texte erscheinen auf Bildschirmen - besonders in kleinen Schriftgrößen wie etwa in den Figuren 4a und b zu sehen - oft nur schwer lesbar. Dies hängt natürlich mit der typischerweise vierfach niedrigeren Auflösung von Bildschirmen gegenüber Laserdruckern zusammen. Aber es rührt in der Hauptsache daher, daß wir für die Betrachtung von Farbbildern - d.h. für Farben, insbesondere rot - einen geringeren Auflösungsbedarf haben. Bei einem üblichen Betrachtungsabstand von 80 cm bei Bildschirmen von Computerarbeitsplätzen beträgt der Auflösungsbedarf für Farben etwa 75 dpi (dots per inch), während er für schwarzweiße Bilder (z.B. Texte oder CAD-Graphiken) etwa 175 dpi oder mehr beträgt. Insbesondere tritt dieser erhöhte Auflösungsbedarf für das Erkennen von dünnen Linien in Graphikdarstellungen und von Wörtern beim Lesen von Text in kleinen Schriftgrößen auf.

Seit 1980 haben sich die Hersteller von Computern und Betriebssystemen intensiv bemüht, die Schriftzeichen aus Konturdaten für die Darstellung auf Bildschirmen, in der Regel schwarzweiß, zu rastern und dabei eine bestmögliche Lesbarkeit und möglichst formgetreue Wiedergabe des Schriftbildes zu erhalten, wie es dann später auf höher auflösenden Ausgabegeräten wie Laserdrukkern bzw. -belichtern ausgegeben wird. Dafür ist der Slogan "WYSIWYG" (what you see is what you get) geprägt worden.

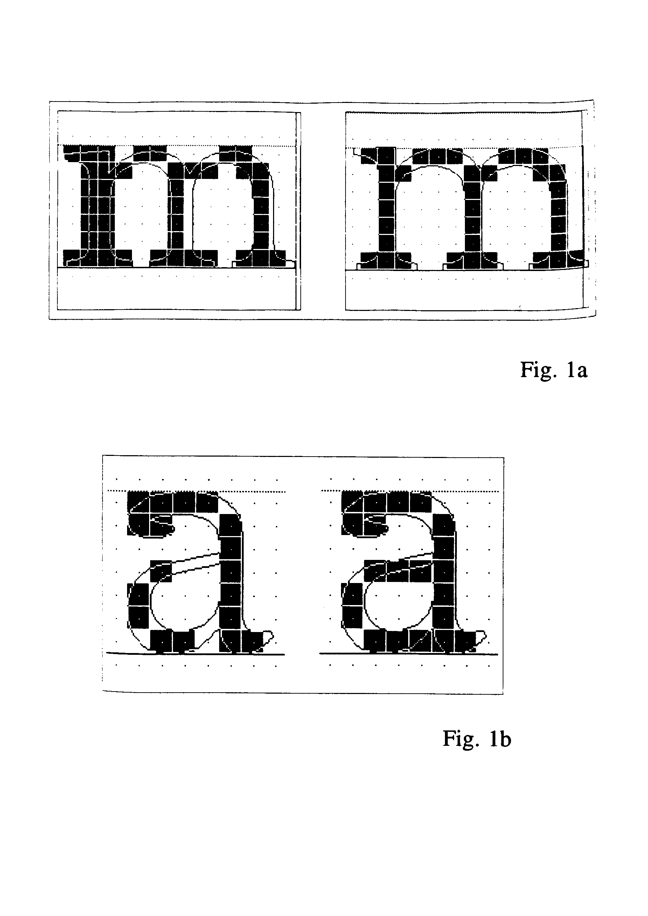

Verschiedene Hersteller haben Datenformate zur Speicherung und Bereithaltung der Schriftzeichen und verwandten Graphikelemente entwickelt, die als intelligente Konturformate bezeichnet werden (intelligent digital outline formats). Schriftzeichen werden aus schwarzen, flächigen Strichen gebildet, deren Konturen (Outlines) stückweise durch kurze Geraden (Vektoren) oder Kurvenstücke beschrieben werden. Als Kurven werden am häufigsten Teilkreise, Abschnitte von quadratischen und von kubischen Splinefunktionen verwendet. Zusätzlich werden diesen Konturbeschreibungen Anweisungen für die Ausführung des Rasterns (hints oder instructions) beigegeben, damit sogenannte Rasterunglücke vermieden werden können. Als solche bezeichnet man zum Beispiel eine Rasterung des Buchstabens m mit unterschiedlich dicken senkrechten Abstrichen, wie im linken Teil von Figur 1 a dargestellt, oder eine Rasterung eines sehr dünnen Striches durch ausschließlich weiße Punkte, wie im linken Teil von Figur 1 b dargestellt. Um solche Artefakte und Zufälligkeiten einer Rasterung zu vermeiden, sind Instruktionen z.B. zur Strickstärkenkontrolle (stem control) und zur Stricherhaltung (drop out control) eingeführt worden. Durch Verwendung der Instruktionen können Rasterunglücke vermieden werden, wie im rechten Teil von Figur 1 bzw. 1 für die oben beispielhaft erwähnten Rasterunglücke gezeigt. Eine ausführliche Beschreibung von verschiedenen intelligenten Konturformaten und des intelligenten Rasterns von Schriftzeichen findet man in der Literatur, z.B. "Digitale Schriften", Peter Karow, Springer Verlag 1992, Kap. 8, und "Schrifttechnologie", Peter Karow, Springer Verlag 1992, Kap. 7, wobei die dort gegebene weitere Beschreibung von Konturformaten von Zeichen und deren Rasterung hier ausdrücklich aufgenommen wird. Dort werden auch die heute modernen und gebräuchlisten Schriftformate wie das PostScript Type 1, TrueType- und das IKARUS-Format beschrieben.

Die Verarbeitungsgeschwindigkeit ist eines der wichtigsten Kriterien für ein Skalierprogramm, das Zeichen mit intelligenten Konturbeschreibungen wie PostScript Type 1, TrueType oder IKARUS in Bitmap-Darstellungen für Bildschirme wandelt. Bei Texten kommt es z.B. häufig vor, daß irgendwo auf der Seite ein Wort oder auch nur ein Buchstabe entfernt wird, wonach die Seite ohne wesentliche Zeitverzögerung mit der Änderung neu angezeigt werden muß. In den herkömmlichen verfahren kann man vier Verarbeitungsphasen unterscheiden, die für eine normale Schrift wie Times Roman bei 12 pt Schriftgröße im Mittel für eine typische Textverarbeitung alle etwa die gleiche Zeit beanspruchen:
1. Schrift aus einem Speicher laden, dekomprimieren, Verwaltung initiieren, generelle Parameter bereitstellen (load);
2. Auswertung der Instruktionen und Herstellung von Konturen, die an das gewünschte Raster (z.B. einer 12 pt-Größe für 72 Ipi auf dem Bildschirm) angepaßt sind (grid fit);
3. Ausführung der mathematischen Anweisungen zur Kurven- und Geradenberechnung und Ermittlung der Rasterpunkte, die auf der Kontur liegen (grid walk); und
4. Ausfüllen der schwarzen Bildpunkte zwischen je zwei Konturen (Bit fill).

Das Resultat ist eine Bitmap, die die Rasterung des Buchstabens darstellt, wobei die Bitwerte 0 und 1 je nach Definition für weiß und schwarz oder umgekehrt stehen.

Diese Bitmap wird nach Berechnung der Buchstabenposition, die sich aus der Textberechnung in einem geräteunabhängigen Textkoordinatensystem (die Positionen in diesem Textkoordinatensystem werden im folgenden als Textkoordinaten bezeichnet) in einer Feinheit von z.B. 2400 Ipi und Einheiten von 1/20 pt (ein pt ist die Größenmaßeinheit für Schriftzeichen und beträgt etwa 0,351 mm (Englisch Pica Point) bzw. 0,375 mm (Didot-Punkt)) ergibt, auf eine ihr entsprechende, relative grobe und mithin gerundete Bildschirmposition in den zugehörigen Bildwiederholspeicher (Video-Ram) kopiert.

Weil die Bildschirmpunkte relativ große Flächen einnehmen, nämliche etwa 0,4 x 0,4 mm² bis 0,25 x 0,25 mm² (ca. 70 Ipi bis ca. 100 Ipi, Ipi = lines per inch), muß man in Kauf nehmen, daß die Rasterung der Schriftzeichen grob ist, und insbesondere für kleinere Schriftgrößen in bezug auf ihre Lesbarkeit unzureichend ist. Ferner muß man in Kauf nehmen, daß die Buchstabenbreiten in ganzen Bildschirmpunkten gerastert werden, dadurch recht unterschiedliche Buchstabenpositionen und Buchstabenabstände ermittelt werden und darunter das Erscheinungsbild der Textzeile insgesamt zwangsläufig leidet. Ebenso werden die Buchstaben auch in y-Richtung jeweils nur auf eine Fernsehzeile genau positioniert, was zu unterschiedlichen Textzeilenabständen in einem Text führt. Analog gilt für CAD-Graphiken, daß Linienstärken, die auf Papierformat größer als A4 eine Linienstärke von 0,2 mm haben, nicht passend auf einem typischen Bildschirm dargestellt werden können; dazu wären so geringe Linienstärken wie 0,05 mm erforderlich.

Für eine bessere Qualität der Textdarstellung wäre es wünschenswert, die relative Position der Buchstaben nebeneinander genauer zu zeigen, als es mit Einheiten von 0,25 bis 0,4 mm Länge möglich ist, ebenso die Lage der Zeilen untereinander genauer darzustellen als dies mit den Bildpunktgrö- ßen auf den heute üblichen Bildschirmgeräten möglich ist. Zum Vergleich sei angemerkt, daß in der Typografie, der Buchdruckerkunst, wenigstens mit Einheiten von 1/4 pt (ca. 0,1 mm) gearbeitet wird. Da eine derartige Verfeinerung der Bildpunktgröße bzw. der Rastergröße von Bildschirmgeräten in verschiedener Hinsicht zu aufwendig ist, muß nach anderen Wegen gesucht werden, die Lesbarkeit und Bildqualität von Texten und Graphiken auf Bildschirmgeräten mit heute üblichen Auflösungen zu verbessern.

Aus EP-A 0 132 456 ist ein Verfahren zur Kontrolle der Satzqualität von elektronischen Satzanlagen durch Anzeige des Satzbildes auf einem Monitor bekannt. In der Satzanlage ist die Bitmap einer ganzen zu druckenden Seite, mit der ein Film belichtet werden soll, in sehr feiner Rasterung abgespeichert. Um vor Belichtung des Films eine Kontrolle des Satzbildes zu ermöglichen, wird die komplette Bitmap der Seite ausgelesen und auf ein gröberes Raster für den Monitor gewandelt, indem jeweils m aufeinanderfolgende Pixel von n benachbarten Zeilen zusammengefaßt werden und der durchschnittliche Grauwert dieses m x n Überpixels bestimmt und diese Überpixel als Bildschirm-Pixel auf dem Monitor angezeigt wird. Ein derartiges Verfahren ist jedoch für die Textdarstellung auf einfachen Bildschirmgeräten (Personal Computern) nicht praktikabel, da eine feingerasterte Bitmap einer zu druckenden Seite erst in den Ausgabegeräten von dazu ausgelegten Prozessoren (RIPs, Raster Image Processors) unter erheblichem Zeitaufwand erstellt wird und erst wieder in den PC zurücktransferiert werden müßte, was insgesamt zu völlig unakzeptablen Antwortzeiten führen würde, da bei interaktivem Arbeiten am Bildschirm eine praktisch verzögerungsfreie Anzeige gefordert wird. Im übrigen müßte bei jeder Änderung der Seite, sei es auch nur ein Buchstabe, die ganze Seite neu im Feinraster erstellt werden und wieder ins Bildschirmraster zurücktransformiert werden, was sich aus Gründen der Verarbeitungsgeschwindigkeit verbietet.

Es ist Aufgabe der vorliegenden Erfindung, ein Verfahren zur Darstellung von Zeichen und Graphikelementen auf Bildschirmgeräten zu schaffen, mit dem die Lesbarkeit und Bildqualität bei gleicher Bildschirmauflösung gegenüber herkömmlichen Verfahren bei einem für interaktive Anwendungen vertretbaren Zeitaufwand verbessert wird.

Erfindungsgemäß ist ein Verfahren zur Schwarzweiß-Text- und Graphikdarstellung auf einem Bildschirmgerät, welches ein Bildschirmraster mit einer vorgegebenen Anzahl von Bildpunkten in x- und y-Richtung und einen Bildwiederholspeicher mit einer Bittiefe von i Bit pro Bildschirmraster-Bildpunkt aufweist, wobei die darzustellenden Zeichen (Buchstaben, verwandte grafische Elemente und Strichzeichnungselemente) in Konturformat aus einem Speicher geladen werden, passend zu den Text/Bild-Anforderungen skaliert, gedreht und positioniert werden, und wobei die auf der Kontur jedes Zeichens liegenden Rasterpunkte mittels eines Rasterverfahren ermittelt werden (grid walk), dadurch gekennzeichnet, daß die Rasterung und Berechnung der Zeichenpositionen zeichenweise für die einzelnen Zeichen im Text oder in der Graphik in einem Feinraster vorgenommen wird, in welchem jeder Bildpunkt des Bildschirmrasters in x-Richtung in m und in y-Richtung in n Feinraster-Bildpunkte unterteilt ist, wobei m, n natürliche Zahlen größer 1 sind und m x n ≦ i ist, und jedes einzelne Zeichen in dem Feinraster in eine Bitmap-Kodierung gewandelt wird, jeweils die Bitwerte der m x n Feinraster-Bildpunkte in jedem Bildschirmraster-Bildpunkt jedes Zeichens als Bitfolge auf den Speicherplatz des jeweiligen Bildschirmraster-Bildpunktes in dem Bildwiederholspeicher geschrieben werden, und zur Bilddarstellung jeder Bildschirm-Bildpunkt-Speicherplatz des Bildwiederholspeichers ausgelesen und dem jeweiligen Bildschirmraster-Bildpunkt ein von der Summe der Bitwerte der ausgelesenen Bitfolge abhängiger Grauwert zugewiesen und mit dem Grauwert entsprechender Intensität auf dem Bildschirm zur Anzeige gebracht wird.

Mit dem erfindungsgemäßen Verfahren ergibt sich (1.) eine bessere Darstellung des Einzelzeichens, (2.) eine bessere Positionierung der Zeichen in einer Textzeile (in x-Richtung), (3.) eine bessere Positionierung der Textzeilen untereinander (in y-Richtung), und damit insgesamt (4.) eine bessere Lesbarkeit und Formgetreuheit des Schriftbildes bzw. von Graphikteilen.

Es ist ein wesentlicher Vorteil der vorliegenden Erfindung, daß die Bildschirmdarstellung sehr schnell erzeugt werden kann, so daß sich in dieser Hinsicht kein Nachteil gegenüber dem herkömmlichen Verfahren mit schlechterer Bildqualität (Bitmap) ergibt.

Damit ist das erfindungsgemäße Verfahren sehr gut für interaktive Anwendungen geeignet, bei denen später auf hochauflösenden Druckern auszugebende Seiten immer wieder verändert werden und damit häufig, und ohne für den Benutzer merkliche Zeitverzögerung neu aufgebaut werden müssen.

In einem ersten Schritt des erfindungsgemäßen Verfahrens wird jedes angeforderte Zeichen in einem Feinraster gerastert, in dem jeder Bildpunkt des Bildschirmrasters in x-Richtung bzw. y-Richtung m-fach bzw. n-fach unterteilt ist, so daß in jedem Bildschirmraster-Bildpunkt m x n Feinraster-Bildpunkte liegen. Jedes einzelne Zeichen wird in dem Feinraster unter Verwendung seiner Konturkodierung mittels herkömmlicher Verfahren zur Rasterung gerastert; dadurch werden die auf der Kontur liegenden Feinrasterpunkte bestimmt (grid walk), wobei anschließend eine Bitmap-Darstellung in dem Feinraster erzeugt wird (bit fill). Damit ist jedem beteiligten Bildpunkt des Feinrasters ein Bitwert von 1 oder 0 zugewiesen werden (für an oder aus in den Farben rot, grün, blau oder schwarzweiß).

Im nächsten Schritt werden nun jeweils die Bitwerte der m x n Feinraster-Bildpunkte jedes Bildschirmraster-Bildpunktes eines Zeichens als Bitfolge in den Speicherplatz des jeweiligen Bildschirmraster-Bildpunktes im Bildwiederholspeicher geschrieben.

Im nächsten Schritt wird bei der Bilddarstellung jeder Bildschirm-Bildpunkt-Speicherplatz des Bildwiederholspeichers ausgelesen und dem jeweiligen Bildschirmraster-Bildpunkt ein von der Summe der Bitwerte der ausgelesenen Bitfolge abhängiger Grauwert zugewiesen und mit dem Grauwert entsprechender Intensität auf dem Bildschirm zur Anzeige gebracht.

Damit wird ein Teil des höheren Informationsgehalts des Feinrasters in das gröbere Bildschirmraster übernommen, indem der Grauwert jedes Bildschirmraster-Bildpunktes jeweils abhängig von der Anzahl der gefüllten (schwarzen) Feinraster-Bildpunkte in ihm bestimmt und in eine entsprechende Intensität des Bildpunktes umgesetzt wird. Die Summe der gefüllten Feinraster-Bildpunkte ergibt sich einfach als Quersumme der Bitfolge, wenn 1 für schwarz und 0 für weiß steht.

In einer besonders bevorzugten Ausführungsform werden die Summe der gefüllten Feinraster-Bildpunkte und der Grauwert jedoch nicht rechnerisch aus der Bitfolge bestimmt, sondern es wird jeder Bitfolge ein Grauwert zugewiesen, indem die aus dem Bildwiederholspeicher ausgelesene Bitfolge als Adresse interpretiert und der zugehörige Grauwert mit dieser Adresse aus einer vorab berechneten und gespeicherten Tabelle (Lookup-table) ausgelesen wird. Durch diese LUT-Technik kann eine direkte Umwandlung des Feinrasters in jedem Bildschirmraster-Bildpunkt in einen Grauwert ohne irgendwelche Rechenschritte vorgenommen werden. Dieser Schritt kann beispielsweise auf dem Graphikboard direkt auf die Auslese des Bildwiederholspeichers folgend ohne Zeitverlust und unter sehr geringem elektronischem Mehraufwand ausgeführt werden.

Diese Art der Nutzung des Bildwiederholspeichers von Farbbildschirmen hat eine Reihe von Vorteilen:
1. Es wird kein zusätzlicher Speicher für höheraufgelöste Textbereiche und Schwarzweißgraphiken benötigt;
2. Durch vorher bereitgestellte Lookup-tables entsteht beim Display kein Zeitverlust für Text- /Bilddarstellungen in besser aufgelöster Graudarstellung auf Farbbildschirmen;
3. Für Texte und Schwarzweißgraphiken wird die Lesbarkeit und empfundene Darstellungsqualität erhöht und weitgehend der von Laserdruckern angeglichen;
4. Für elektronische Bildvergrößerungen oder -manipulationen steht das höher aufgelöste Feinrasterbild zur Verfügung; dadurch kann eine deutliche Qualitätsverbesserung für Graphikprogramme in bezug auf die Möglichkeiten zur Feinpositionierung und Feinretusche erreicht werden;
5. Die Graphik- und Textprogramme können schon bei der Bildschirmdarstellung mit einer den Laserdruckern entsprechenden höheren Auflösung rechnen;
6. Die höhere Auflösung ist nicht nur für die Textdarstellung von großem Nutzen, sondern auch für die Darstellung von Strichgraphiken in CAD-Programmen. Gerade im Bereich der CAD-Anwendungen bedarf es höher aufgelöster Darstellungen von technischen Zeichnungen in größeren Formaten als DIN A3, wenn man für Überprüfungen oder Korrekturzwecke auf die Ausgabe von Papier verzichten möchte;
7. Die höhere Feinraster-Auflösung kann der eines angeschlossenen Laserdruckers angepaßt werden, so daß die Information aus dem Bildwiederholspeicher direkt zur Druckerausgabe benutzt werden kann (screen shots), was zum einen die Ausgabegeschwindigkeit erhöht, da keine erneute Interpretation der Seitenbeschreibung und Rasterung in dem Drucker erforderlich ist, und zum anderen ermöglicht, Drucker einzusetzen, die mit weniger Verarbeitungselektronik ausgerüstet sind (z.B. Drucker ohne PostScript-RIP).

In einer bevorzugten Ausführungsform wird eine Grauabstufung in (n x m + 1) Grauwerte von weiß bis schwarz vorgesehen und die Grauwerte durch die Summe der Bitwerte der Feinraster-Bildpunkte repräsentiert, so daß sich Grauwerte 0, 1,...., n x m von weiß bis schwarz (oder umgekehrt) ergeben. Im Ergebnis bedeutet dies, daß der Grauwert eines Bildschirmraster-Bildpunktes durch den verhältnismäßigen Anteil der darin befindlichen gefüllten Feinraster-Bildpunkte bestimmt wird, d.h. der Grauwert ist proportional zum Flächenverhältnis von gefüllten (schwarzen) Feinraster-Bildpunkten zur Gesamtfläche des Bildschirmraster-Bildpunktes und entspricht mithin einem durchschnittlichen Grauwert. Es können aber auch andere Abstufungen der Grauwerte vorgenommen werden, insbesondere auch nichtlineare Abhängigkeiten des Grauwertes von der Anzahl der gefüllten Feinraster-Bildpunkte vorgesehen werden.

In einer bevorzugten Ausführungsform des Verfahrens wird das Feinraster jedes Bildschirmraster-Bildpunktes in den Bildwiederholspeicher geschrieben, indem die Bitfolge mit dem Inhalt des diesem Bildschirmraster-Bildpunkt entsprechenden Speicherplatzes im Bildwiederholspeicher bitweise durch die logische ODER-Verknüpfung verknüpft wird. Dadurch wird sichergestellt, daß, wenn sich benachbarte Zeichen sehr nahe kommen, sich in ihren Zwischenräumen die Grauwerte in den Bildschirmpunkten richtig überlagern, d.h. der Grauwert eines Bildpunktes eines ersten, bereits in den Wiederholspeicher eingeschriebenen Zeichens wird zu dem Grauwert eines später verarbeiteten Zeichens, das in den gleichen Bildschirm-Bildpunkt hineinreicht, "addiert".

Mit dem erfindungsgemäßen Verfahren muß man aber nicht auf die Darstellung von Farbe verzichten. Je nachdem, wie fein das Feinraster gewählt wird und welche Bittiefe der Bildwiederholspeicher hat, können überzählige Bits zur üblichen Kodierung der Farbe des Bildschirmraster-Bildpunktes verwendet werden, welche Farbe dann mit dem sich aus dem ebenfalls gespeicherten Feinraster ergebenden Grauwert (d.h. Farbhelligkeitswert oder Intensität) auf dem Bildschirmpunkt angezeigt wird.

Zweckmäßigerweise wird in jedem Speicherplatz 1 Bit als Flaggenbit verwendet, das anzeigt, ob in dem Speicherplatz Farbe in der bisher üblichen Weise gespeichert ist (Farbmodus) oder ob auf dem Speicherplatz in der erfindungsgemäßen Weise Feinrasterpunkte gespeichert werden (Feinrastermodus). Nur im letzteren Fall wird bei der Bilddarstellung der Speicherplatzinhalt entsprechend dem erfindungsgemäßen Verfahren über Ermittlung des Grauwertes erst in eine Farbintensität gewandelt.

Bei einer Bittiefe des Bildwiederholspeichers von 16 + 1 Bit kann man z.B. 1 Bit als Flaggenbit verwenden und und das Bildschirmraster in ein m = n = Feinraster unterteilen. In diesem Fall ist keine zusätzliche Kodierung von Farbe mehr möglich. Verwendet man dagegen einen Bildwiederholspeicher mit 24+1 Bit pro Bildschirmpunkt, kann bei einem m = n = 4 Feinraster und einem Flaggenbit noch 8 Bit zur Farbkodierung verwenden.

Mit dem erfindungsgemäßen Verfahren wird eine deutlich verbesserte Lesbarkeit und Bildqualität erreicht, ohne daß sich der Rechenaufwand und damit die Zeit zum Aufbau eines Bildschirmbildes erhöht. Eine Zeitersparnis kann sich mit dem vorliegenden Verfahren insbesondere ergeben, da bei der Rasterung des Zeichens auf den Schritt 2. (grid fit) des oben aufgeführten herkömmlichen Verfahrens verzichtet werden kann. Eine optimale Einpassung des Zeichens in das Feinraster mit Hilfe intelligenter Rastertechniken ist nicht erforderlich, da dieses Feinraster feiner ist als das zur Darstellung kommende und sich die auf der Feinrasterebene auftretenden Rasterunglücke auf der Bildschirm-Bildpunktebene nur in vernachlässigbarem Maße auswirken. Dadurch kann, insbesondere wenn hohe Prozeßgeschwindigkeit für die Bilddarstellung erforderlich ist, in vorteilhafter Weise auf das intelligente Rastern unter Verwendung der Instruktionen im Konturformat verzichtet werden, um Rechenzeit zu sparen.

Gemäß einem weiteren Aspekt der Erfindung ist ein Verfahren der oben genmannten Art dadurch gekennzeichnet, daß
vor Beginn einer Textdarstellung nur einmal alle Zeichen einer vom Benutzer gewählten Schrift in einem Feinraster gerastert werden, das in x-Richtung m-fach und in y-Richtung n-fach feiner ist als das Bildschirmraster, wobei m, n natürliche Zahlen größer 1 sind und m x n ≦ i ist, und alle gerasterten Zeichen in eine Bitmap-Kodierung gewandelt und in einem Zwischenspeicher abgespeichert werden,
zur Text/Bilddarstellung die feingerasterten Zeichen nach den Text/Bild-Anforderungen aus dem Zwischenspeicher abgerufen und nach ihrer Text/Bild-Position in eine entsprechende Feinrasterposition im Bildschirmraster übertragen werden,
jeweils die Bitwerte der m x n Feinraster-Bildpunkte in jedem Bildschirmraster-Bildpunkt jedes Zeichens als Bitfolge auf den Speicherplatz des jeweiligen Bildschirmraster-Bildpunktes in dem Bildwiederholspeicher geschrieben werden,
zur Bilddarstellung jeder Bildschirm-Bildpunkt-Speicherplatz des Bildwiederholspeichers ausgelesen und dem jeweiligen Bildschirmraster-Bildpunkt ein von der Summe der Bitwerte der ausgelesenen Bitfolge abhängiger Grauwert zugewiesen und mit dem Grauwert entsprechender Intensität auf dem Bildschirm zur Anzeige gebracht wird.

Bei dem zuletzt genannten erfindungsgemäßen Verfahren wird die Verarbeitungsgeschwindigkeit dadurch weiter erhöht, daß die Buchstaben einer gewünschten Schrift nur einmal zu Beginn im Feinraster gerastert und abgespeichert werden und anschließend, jedesmal wenn sie im Text benötigt werden, nur noch abgerufen und in die entsprechende Textposition versetzt werden müssen, um die Graudarstellung im Bildschirmraster zu ermitteln.

Die Erfindung wird im folgenden anhand der Figuren näher erläutert; es zeigen:
Figur 1 a: Rasterdarstellungen eines Zeichens, links einfach gerastert, rechts mit einem intelligenten Rasterverfahren unter Benutzung der Instruktionen (Strichstärkenkontrolle);
Figur 1 b: Rasterdarstellungen eines Zeichens, links einfach gerastert, rechts mit einem intelligenten Rasterverfahren unter Benutzung der Instruktionen (Stricherhaltung);
Figur 2a: Linien in der Stärke eines Bildschirmpunktes mit verschiedenen Grauwerten (Originalgröße);
Figur 2b: die Linien aus Figur 2a in zweifacher Vergrößerung;
Figur 3a: Buchstabenpaare mit verschiedenen Grauwerten in ihrem Zwischenraum (Originalgröße);
Figur 3b: Vergrößerung der Buchstabenpaare aus Figur 3a;
Figur 4a und 4b: die Darstellung eines mehrzeiligen Textes in 9 pt aus der Schrift Nimbus Roman, wobei zum Vergleich der Text mit einem herkömmlichen Verfahren (Figur 4a) und in Graudarstellung (Figur 4b) auf demgleichen Bildschirmgerät zur Darstellung gebracht ist;
Figur 5: Feinraster der Außenkontur des Buchstabens b;
Figur 6: Buchstabe b (um 90 gedreht) in Lauflängendarstellung;
Figur 7: Darstellung eines Buchstabens im Feinraster, die das Auszählen der in einen m x n Bildschirm-Bildpunkt fallenden Feinraster-Bildpunkte illustriert;
Figur 8: vergrößerte Darstellung des nach dem erfindungsgemäßen Verfahren resultierenden Buchstabens in Graudarstellung im Bildschirmraster;
Figur 9a und 9b: die 16 verschiedenen Graudarstellungen des Buchstabens o, die bei Verschiebung des o entlang der Feinraster-Bildpunkte (m = 4, n = 4) um jeweils einen Feinrasterpunkt in x- und y-Richtung möglich sind, wobei Figur 9a die Originalgröße auf einem typischen Bildschirmgerät und Figur 9b eine Vergrößerung zeigt;
Figur 10 einen Bildschirmraster-Bildpunkt mit einem m = n = 4-Feinraster und die der Matrix der Feinraster-Bitwerte entsprechende Bitfolge zeigt; und
Figur 11 ein Flußdiagramm zeigt, das den Vorgang beim Auslesen des dem in Figur 10 gezeigten Bildschirmraster-Bildpunktes entsprechenden Speicherplatzes in dem Bildwiederholspeicher illustriert.

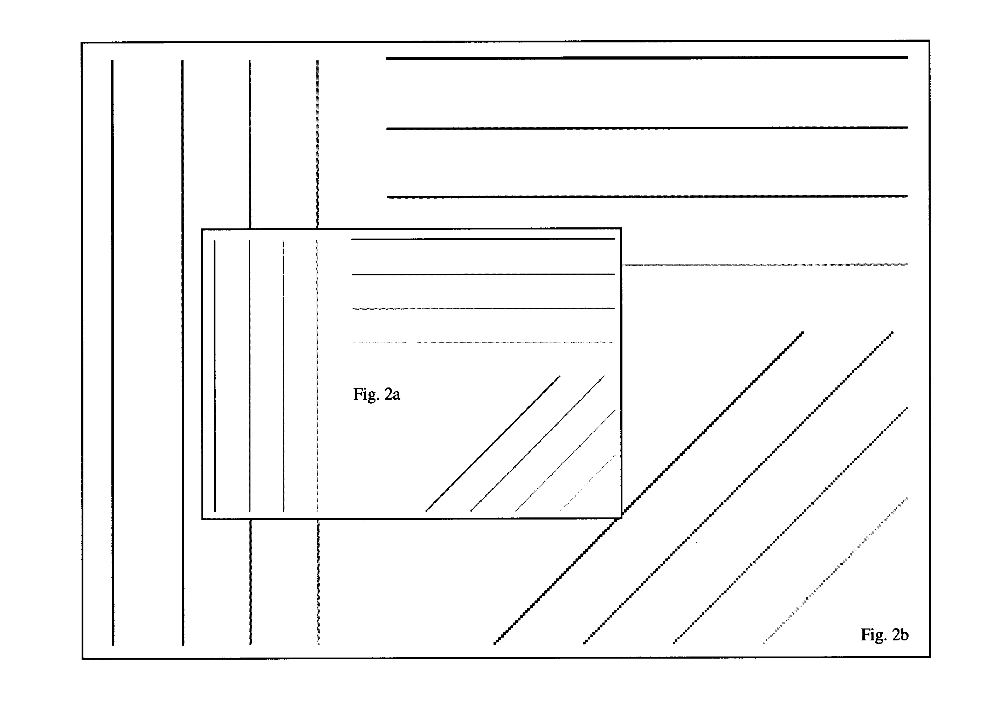

Mit dem erfindungsgemäßen Verfahren wird erreicht, daß man optisch mit kleineren Bildpunkten arbeiten kann als diese auf dem Bildschirmgerät zur Verfügung stehen. Dabei wird folgend physiologische Tatsache ausgenutzt: Mit den Augen nehmen wir Linien von der Stärke eines typografischen Punktes (also ab 72 Ipi) als dünner wahr, wenn sie weniger schwarz, also grau dargestellt werden. Dies ist in Figur 2a zu erkennen, wo nebeneinander Linien gleicher Breite aber mit verschiedenen Grauwerten dargestellt sind. In Figur 2b ist zum Vergleich die Darstellung aus Figur 2a zweifach vergrößert gezeigt. Daraus wird deutlich, daß Linien abhängig vom Grauwert dünner oder dicker erscheinen, auch wenn ihre tatsächliche Breite die gleiche ist.

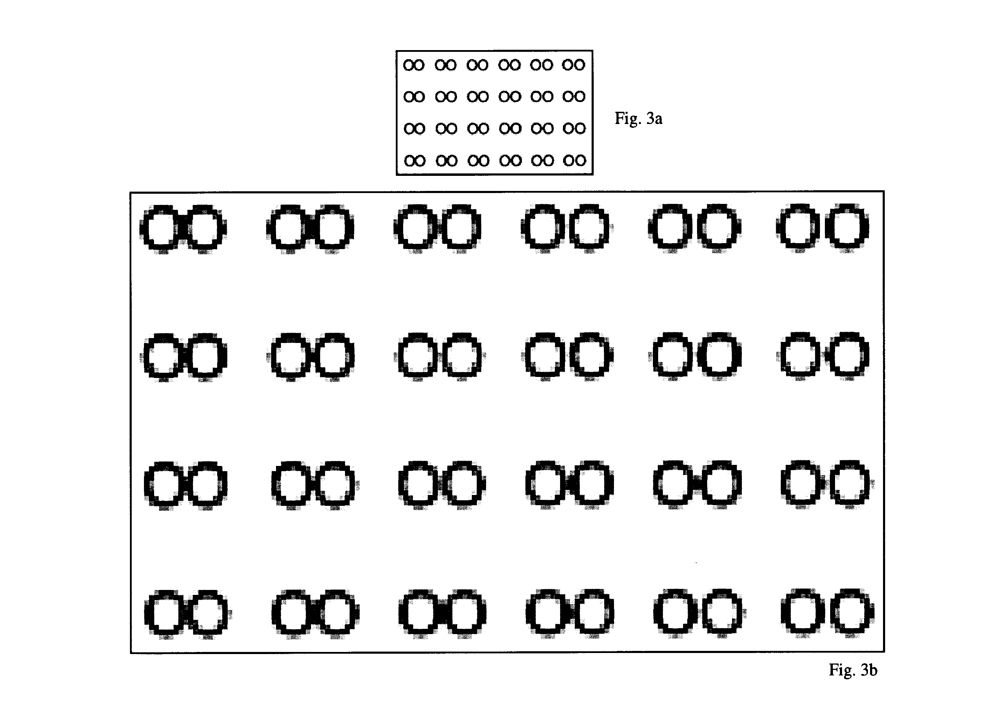

Ferner erscheint uns eine schwarze Fläche bereits verschoben, wenn wir in einer Richtung, z.B. in der Breite einer Fernsehzeile, grau hinzufügen. Insbesondere nehmen wir einen Abstand zweier Buchstaben schon dann wahr, wenn zwischen ihnen bloß grau eingefügt wird, wie dies in Figur 3a zu sehen ist. Je heller der eingeschobene Punkt ist, desto weiter erscheinen die Buchstaben getrennt; in Figur 3b sind die Buchstabenpaare aus Figur 3a vergrößert (und in umgekehrter Anordnung) dargestellt. Die übereinanderliegenden Zeilen unterscheiden sich jeweils nur durch Verschiebungen im Feinraster, die zu leicht unterschiedlichen Graudarstellungen führen.

Am deutlichsten wird der Unterschied zwischen einer herkömmlichen schwarzweiß- und einer erfindungsgemäß für Bildschirmgeräte vorzunehmende Graudarstellung bei Betrachtung eines mehrzeiligen Textes beim Vergleich des gesamten Erscheinungsbildes auf dem Bildschirmgerät. In Figur 4a ist ein mehrzeiliger Text mit einem herkömmlichen Verfahren auf einem Bildschirmgerät dargestellt, während der gleiche Text auf dem gleichen Bildschirmgerät mit dem erfindungsgemäßen Verfahren ein in Figur 4b entsprechendes Schriftbild ergibt. Die Verbesserung der Lesbarkeit und die im Gesamteindruck verbesserte Bildqualität sind deutlich zu erkennen.

Frühere Untersuchungen an Bildschirmen (Xerox, Tektronix in "Visual Fatigue and Operator Performance with DVST and Raster Displays", Proc. of the Society for Information Display, Vol. 24, Nr. 1, 1983) hatten ergeben, daß die untersuchten Personen bei der Erkennung und Fixierung von grau dargestellten Buchstaben ermüdeten. Weil nämlich die Graudarstellung einen zum Teil unscharfen Rand der schwarzen Buchstabenflächen verursacht, hatten die Probanden versucht, die Buchstaben immer wieder erneut zu fokussieren in der unbewußten Annahme, daß wahrzunehmende Bild nicht ganz scharf eingestellt zu haben. Nun kommt es aber beim Lesen von Texten nur selten und dann auch nur kurz vor, daß wir die Buchstaben fixieren, denn wir lesen Text, indem wir mit den Augen in sogenannten Sakkaden springen. Also ist es für uns natürlich, daß wir beim Lesen den größten Teil eines Textes nur grau wahrnehmen. Hierin liegt eine weitere physiologische Begründung dafür, daß Graudarstellung von Texten gleichbedeutend mit genauerer, also höher auflösender Darstellung empfunden wird.

Als Beispiel wird ein Bildschirmgerät mit einer Fläche von etwa 1000 X 1000 Bildpunkten zugrunde gelegt und ferner eine reine Schwarzweiß-Darstellung betrachtet. Für das Feinraster wird in x-Richtung eine m-fache Feinunterteilung und in y-Richtung eine n-fache Feinunterteilung vorgenommen, wobei in einer bevorzugten Ausführungsform m = 4 und n = 4 ist. Damit wird gemäß den Erfahrungen aus der Typographie erreicht, daß man auf einen 1/4 Punkt genau (ca. 0,1 mm) positionieren kann.

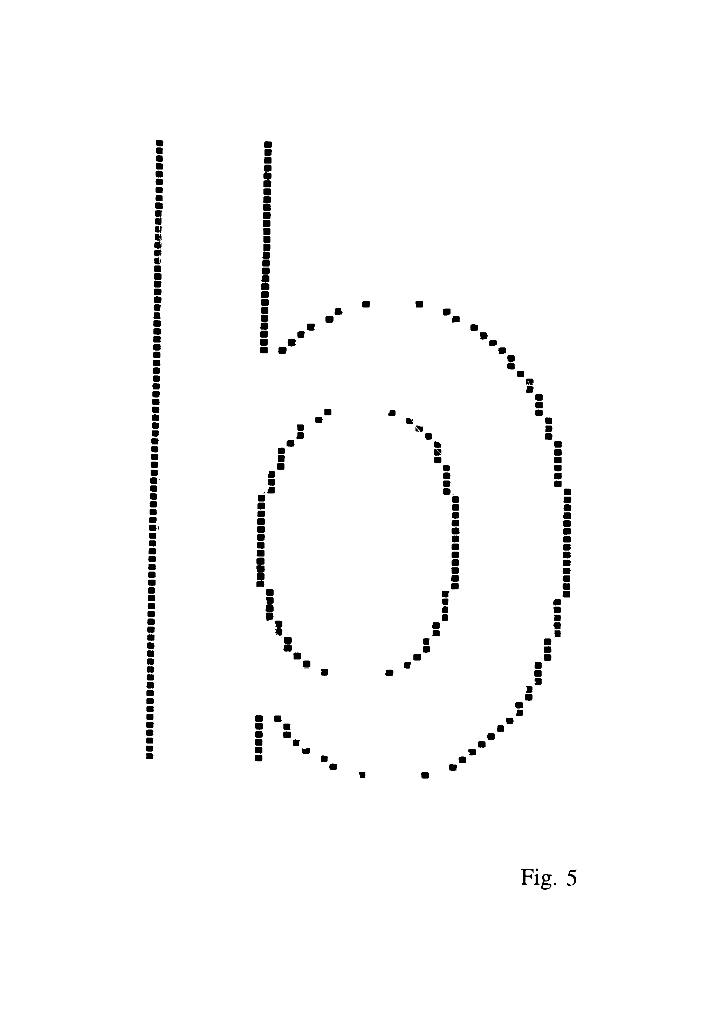

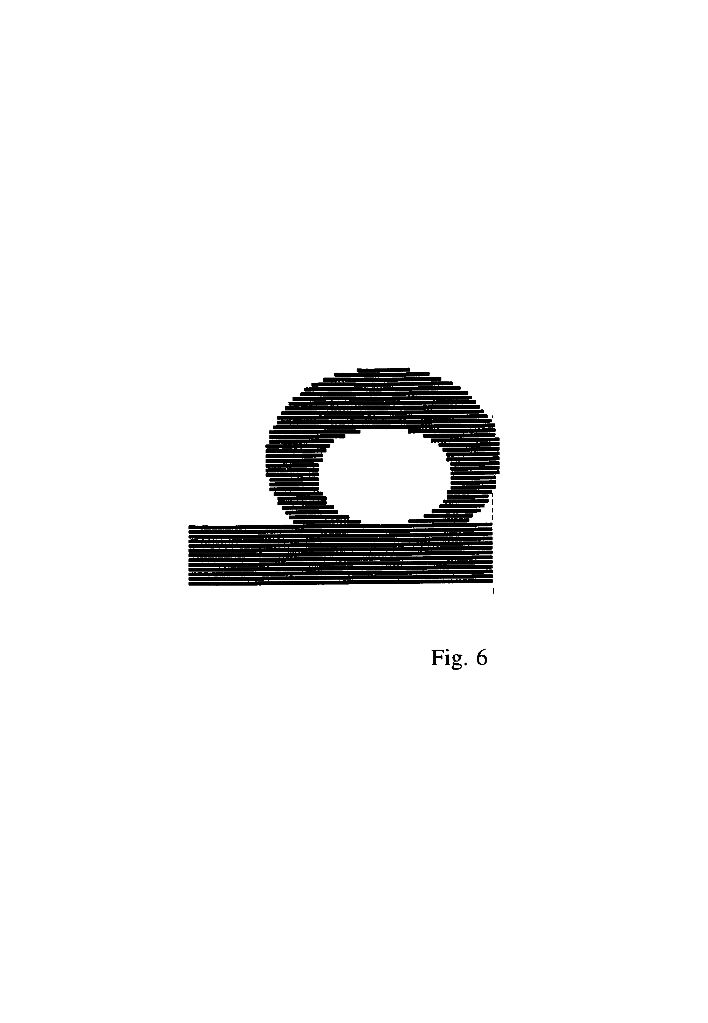

In dem erfindungsgemäßen Verfahren wird die Position des Zeichens in dem Feinraster bestimmt, d.h. das Zeichen wird in das Feinraster gelegt und gerastert, wobei eines der bekannten Verfahren zur Rasterung verwendet werden kann. Dabei können einfache Rasterverfahren verwendet werden, so daß auf die Verwendung der heute regelmäßig in den Konturformaten der Buchstaben mit abgespeicherten Instruktionen und die Anwendung intelligenter Rasterverfahren (grid fit) verzichtet werden kann. Das Ergebnis der Rasterung in dem Feinraster ist in Figur 5 für den Kleinbuchstaben b dargestellt. Die auf der Kontur liegenden Gitterpunkte werden mit einem der bekannten Verfahren bei der Gitterwanderung (grid walk) bestimmt. Das Zeichen kann zunächst mittels der auf der Kontur liegenden Rasterpunkte wie in Figur 5 oder in einer Lauflängen-Kodierung dargestellt werden. Bei der Lauflängen-Kodierung wird das Zeichen zeilenweise erfaßt, indem in jeder Feinrasterzeile der Anfangsrasterpunkt jedes aus mindestens einem gefüllten Bildpunkt bestehenden Striches in x-Richtung und die Differenz zwischen End- und Anfangsrasterpunkt des Strichs, d.h. die Lauflänge in Einheiten von Bildpunkten in dem Feinraster angegeben wird. Figur 6 illustriert die Lauflängen-Kodierung, dargestellt für ein liegendes b, wobei die Lauflängen in jeder Zeile als durchgezogener Strich dargestellt ist.

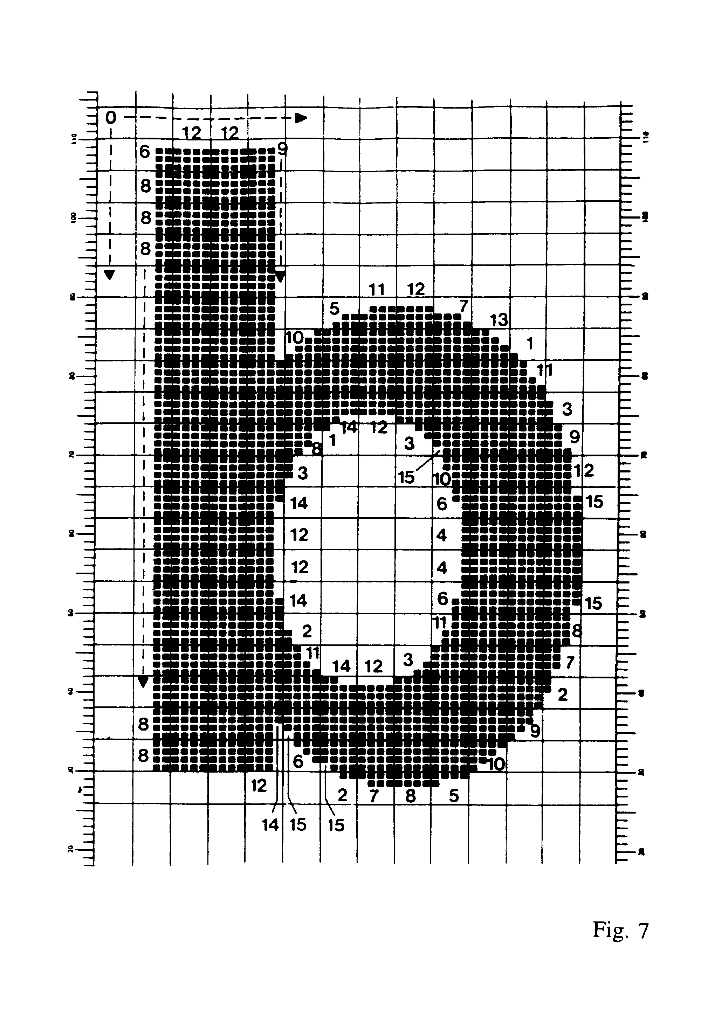

Anschließend werden die innerhalb der Kontur liegenden Feinraster-Bildpunkte aufgefüllt (bit fill), um die Bitmap des Zeichens im Feinraster zu erhalten. Das Ergebnis ist in Figur 7 gezeigt, wobei der Buchstabe b in einem m = n = 4 Feinraster gezeigt und außerden das Bildschirmraster eingezeichnet ist. Die Ziffern geben die Anzahlen der gefüllten (schwarzen) Feinraster-Bildpunkte in den jeweiligen Bildschirmraster-Bildpunkten an, die später für die Ermittlung des Grauwertes benötigt wird.

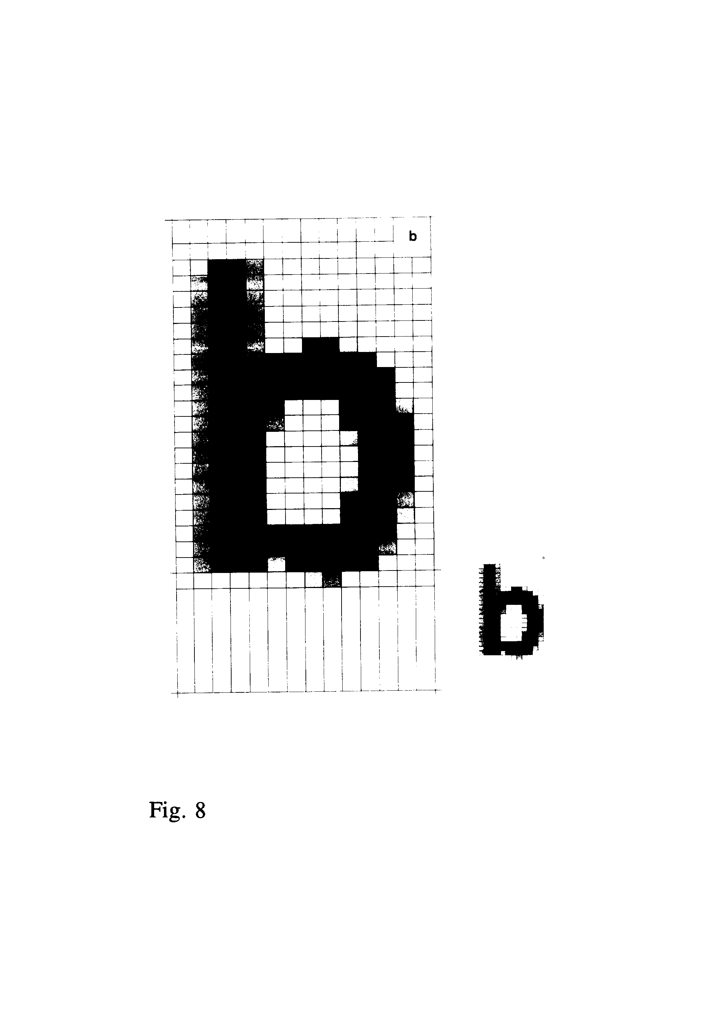

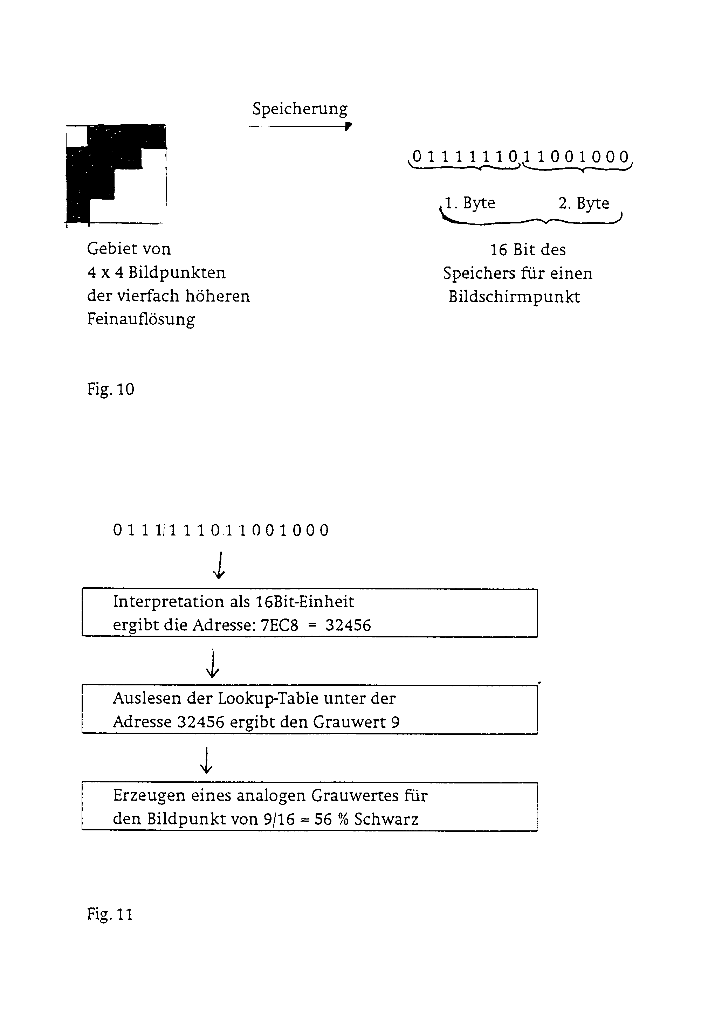

In Figur 10 ist ein einzelner Bildschirmraster-Bildpunkt gezeigt, der mit m = n = in 16 Feinraster-Bildpunkte unterteilt ist und z.B. einem beliebigen Bildschirmraster-Bildpunkt aus Figur 7 entspricht. Im vorliegenden Beispiel werden weiße Bildpunkte durch den Bitwert 0 und schwarze Bildpunkte durch den Bitwert 1 repräsentiert. Zur Speicherung des Bildschirm-Bildpunktes wird nun die Matrix der 16 Bitwerte des Feinrasters als Bitfolge von 16 Bit geschrieben, wie im rechten Teil von Figur 10 dargestellt, und in den dem jeweiligen Bildschirm-Bildpunkt entsprechenden Speicherplatz im Bildwiederholspeicher geschrieben. Bei der Bildanzeige werden aufeinanderfolgend alle Bildschirm-Bildpunkt-Speicherplätze des Bildwiederholspeichers ausgelesen und jeweils die Bitfolge eines Bildschirmraster-Bildpunktes in einen Grauwert umgewandelt. Dies kann entweder rechnerisch geschehen, beispielsweise durch Bildung der Quersumme, oder, und dies ist eine besonders bevorzugte Ausführungsform des erfindungsgemäßen Verfahrens, indem die Bitfolge als Adresse interpretiert wird und der Grauwert mit Hilfe dieser Adresse aus einer vorher abgespeicherten Tabelle (Lookup-table) ausgelesen wird. Die Abspeicherung einer solchen Lookup-table ist möglich, da jede Folge von 16 Bit, die ja nur eine andere Schreibweise einer 4 x 4 Matrix des Feinrasters des Bildschirm-Bildpunktes ist, sich vorab für alle Möglichkeiten auf einen Grauwert abbilden läßt. Im dargestellten Beispiel mit m = n = 4 laufen die Adressen von 0 bis 2^{16 -} 1 = 65535 (die letztere Adresse entspricht einem vollständig mit schwarzen Feinraster-Bildpunkten gefüllten Bildschirmraster-Bildpunkt). Die Lookup-table enthält also 65536 Einträge mit insgesamt 17 verschiedenen Werten, die den Füllungsgrad des Bildschirmraster-Bildpunktes mit schwarzen Feinraster-Bildpunkten repräsentieren. Die Summe der Feinraster-Bitwerte in jedem Bildschirmraster-Bildpunkt kann direkt als Grauwert interpretiert werden, indem die Summe 0 als weiß, m x n als schwarz und zwischen 0 und m x n abgestuft als hellgrau bis dunkelgrau dargestellt wird. Der Grauwert entspricht dann dem Verhältnis von schwarzen Feinraster-Bildpunkten zur Gesamtzahl von Feinraster-Bildpunkten in dem Bildschirmraster-Bildpunkt, also einem durchschnittlichen Grauwert gemittelt über die schwarzen und weißen Feinraster-Bildpunkte darin. Der Grauwert kann jedoch auch über eine vorgegebene Abhängigkeit von der Summe ermittelt werden, insbesondere kann auch eine weniger feine Abstufung der Grauwerte, also weniger als m x n Grauwerte, vorgesehen werden. Das Ergebnis eines Buchstabens in Graudarstellung ist in Figur 8 gezeigt.

Die Verfahrensweise bei Verwendung einer Lookup-table ist noch einmal im Flußdiagramm von Figur 11 dargestellt. Bei der periodischen Auslese des Bildwiederholspeichers wird die Bitfolge (z.B. die Bitfolge 0111111011001000 für den in in Figur 10 dargestellten Bildschirmraster-Bildpunkt) als Adresse interpretiert und entspricht der Dezimalzahl 32456. Unter dieser Adresse wurde in der Lookup-Table vorab bereits ein Grauwert abgelegt, der 9 schwarzen Feinraster-Bildpunkten (vgl. Figur 10) entspricht. In einer bevorzugten Ausführungsform ist der Grauwert einfach gleich dem Anteil schwarzer Feinraster-Bildpunkte gewählt, im vorliegenden Beispiel also 9/16, wobei ein Grauwert 0 dann weiß und Grauwert 1 schwarz repräsentiert.

Bei der geschilderten Verwendung einer derartigen Lookup-table entfallen jegliche Rechenschritte, da diese nur einmal vorab ausgeführt werden müssen, um die Lookup-table zu füllen. Auf diese Weise kann das Verfahren besonders schnell ausgeführt werden.

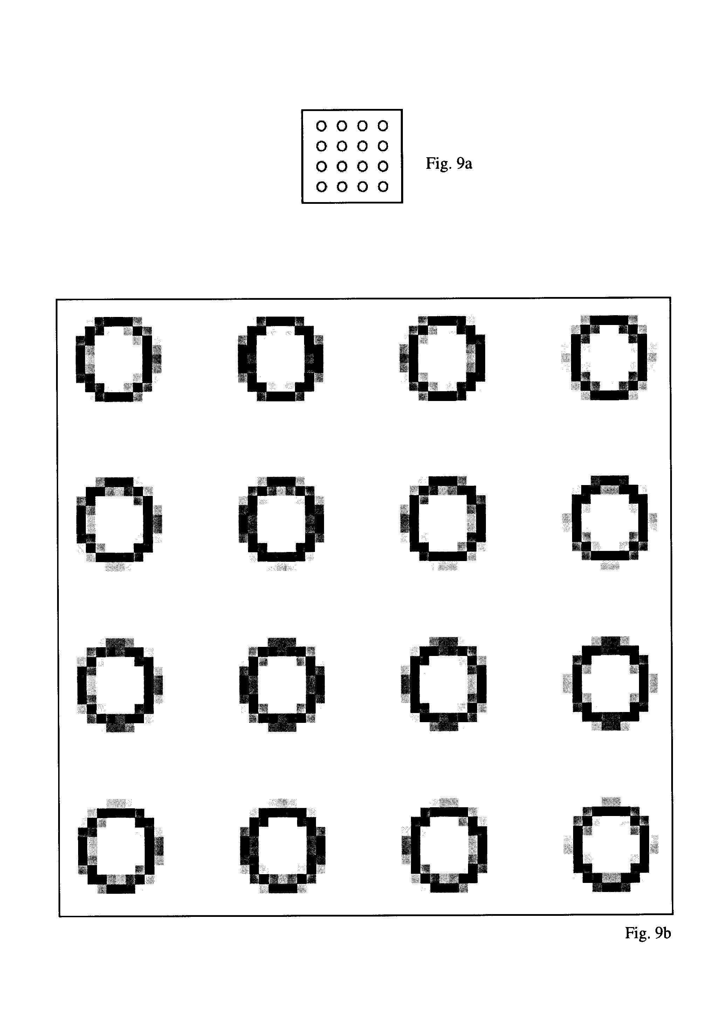

In Figur 9a sind die bei m = 4 und n = 4 möglichen 16 verschiedenen Graudarstellungen des Kleinbuchstabens o dargestellt, die sich bei Verschieben des Zeichens in x- und y-Richtung um jeweils einen Feinraster-Bildpunkt ergeben. Figur 9b zeigt eine Vergrößerung von Figur 9a, aus der deutlich wird, daß sich die Graudarstellungen eines Zeichens je nach Lage im Feinraster leicht unterscheiden.

Das erfindungsgemäße Verfahren ermöglicht ohne Erhöhung der Verarbeitungszeit eine verbessrte Lesbarkeit insbesondere von Schriften mit kleiner Punktgröße und eine Verbesserung der Bildqualität insgesamt. Durch das erfindungsgemäße Verfahren wird nicht nur an Geschwindigkeit für die Graudarstellung gewonnen, sondern auch die Flexibilität in bezug auf Schriftgröße, Position, und mögliche Verdrehung der Zeichen erhalten.

Das Verfahren ist für alle Schriften (neben lateinischen z.B. auch für Kanji-Schriften) sowie für verwandte grafische Elemente, die durch Striche und Kurven beschrieben werden, wie z.B. CAD-Darstellungen, auf Bildschirmen anwendbar.

Das erfindungsgemäße Verfahren ist für die Textdarstellung in modernen Betriebssystemen wie Mac OS oder MS Windows geeignet.

## Patentansprüche

1. Verfahren zur Text- und Graphikdarstellung auf einem Farbbildschirmgerät, welches ein Bildschirmraster mit einer vorgegebenen Anzahl von Bildpunkten in x- und y-Richtung und einen Bildwiederholspeicher mit einer Bittiefe von i Bit pro Bildschirmraster-Bildpunkt aufweist, wobei die darzustellenden Zeichen (Buchstaben, verwandte grafische Elemente und Strichzeichnungselemente) in Konturformat aus einem Speicher geladen werden, passend zu den Text/Bild-Anforderungen skaliert, gedreht und positioniert werden, und wobei die auf der Kontur jedes Zeichens liegenden Rasterpunkte mittels eines Rasterverfahren ermittelt werden (grid walk), dadurch gekennzeichnet, daß
die Rasterung und Berechnung der Zeichenpositionen zeichenweise für die einzelnen Zeichen im Text in einem Feinraster vorgenommen wird, in welchem jeder Bildpunkt des Bildschirmrasters in x-Richtung in m und in y-Richtung in n Feinraster-Bildpunkte unterteilt ist, wobei m, n natürliche Zahlen größer 1 sind und m x n ≦ i ist, und jedes einzelne Zeichen in dem Feinraster in eine Bitmap-Kodierung gewandelt wird,
jeweils die Bitwerte der m x n Feinraster-Bildpunkte in jedem Bildschirmraster-Bildpunkt jedes Zeichens als Bitfolge auf den Speicherplatz des jeweiligen Bildschirmraster-Bildpunktes in dem Bildwiederholspeicher geschrieben werden, und
zur Bilddarstellung jeder Bildschirm-Bildpunkt-Speicherplatz des Bildwiederholspeichers ausgelesen und dem jeweiligen Bildschirmraster-Bildpunkt ein von der Summe der Bitwerte der ausgelesenen Bitfolge abhängiger Grauwert zugewiesen und mit dem Grauwert entsprechender Intensität auf dem Bildschirm zur Anzeige gebracht wird.

2. Verfahren zur Text- und Graphikdarstellung auf einem Farbbildschirmgerät, welches ein Bildschirmraster mit einer vorgegebenen Anzahl von Bildpunkten in x- und y-Richtung und einen Bildwiederholspeicher mit einer Bittiefe von i Bit pro Bildschirmraster-Bildpunkt aufweist, wobei die darzustellenden Zeichen (Buchstaben, verwandte grafische Elemente und Strichzeichnungselemente) in Konturformat aus einem Speicher geladen werden, passend zu den Text/Bild-Anforderungen skaliert, gedreht und positioniert werden, und wobei die auf der Kontur jedes Zeichens liegenden Rasterpunkte mittels eines Rasterverfahren ermittelt werden (grid walk), dadurch gekennzeichnet, daß
vor Beginn einer Textdarstellung nur einmal alle Zeichen einer vom Benutzer gewählten Schrift in einem Feinraster gerastert werden, das in x-Richtung m-fach und in y-Richtung n-fach feiner ist als das Bildschirmraster, wobei m, n natürliche Zahlen größer 1 sind und m x n ≦ i ist, und alle gerasterten Zeichen in eine Bitmap-Kodierung gewandelt und in einem Zwischenspeicher abgespeichert werden, zur Text/Bilddarstellung die feingerasterten Zeichen nach den Text/Bild-Anforderungen aus dem Zwischenspeicher abgerufen und nach ihrer Text/Bild-Position in eine entsprechende Feinrasterposition im Bildschirmraster übertragen werden,
jeweils die Bitwerte der m x n Feinraster-Bildpunkte in jedem Bildschirmraster-Bildpunkt jedes Zeichens als Bitfolge auf den Speicherplatz des jeweiligen Bildschirmraster-Bildpunktes in dem Bildwiederholspeicher geschrieben werden,
zur Bilddarstellung jeder Bildschirm-Bildpunkt-Speicherplatz des Bildwiederholspeichers ausgelesen und dem jeweiligen Bildschirmraster-Bildpunkt ein von der Summe der Bitwerte der ausgelesenen Bitfolge abhängiger Grauwert zugewiesen und mit dem Grauwert entsprechender Intensität auf dem Bildschirm zur Anzeige gebracht wird.

3. Verfahren nach Anspruch 1 oder 2, dadurch gekennzeichnet, daß bei der Zuweisung des Grauwertes die ausgelesene Bitfolge als Adresse interpretiert und mit dieser Adresse der Grauwert aus einer vorab berechneten und abgespeicherten Tabelle ausgelesen wird.

4. Verfahren nach Anspruch 1 oder 2, dadurch gekennzeichnet, daß bei der Zuweisung des Grauwertes die Bitwerte der ausgelesenen Bitfolge aufsummiert werden.

5. Verfahren nach einem der vorhergehenden Ansprüche, dadurch gekennzeichnet, daß von Weiß bis Schwarz insgesamt (m x n + 1) Grauwerte verwendet werden und der Grauwert eines Bildschirmraster-Bildpunktes durch die Summe der Bitwerte des Feinrasters repräsentiert wird.

6. Verfahren nach einem der vorhergehenden Ansprüche, dadurch gekennzeichnet, daß beim Scheiben die Bitfolge der m x n Feinraster-Bildpunkte jedes Bildschirmraster-Bildpunktes mit der in dem diesem Bildschirmraster-Bildpunkt entsprechenden Speicherplatz befindlichen Bitfolge bitweise durch die logische ODER-Verknüpfung verknüpft und in den Speicherplatz des Bildwiederholspeichers geschrieben wird.

7. Verfahren nach einem der vorhergehenden Ansprüche, dadurch gekennzeichnet, daß die Rasterung im Feinraster vorgenommen wird, ohne ein intelligentes Rasterverfahren unter Verwendung der Instruktionen im Konturformat anzuwenden.

8. Verfahren nach einem der vorhergehenden Ansprüche, dadurch gekennzeichnet, daß für das Feinraster m = 8 und n = 4 gewählt wird.

9. Verfahren nach einem der Ansprüche 1 bis 7, dadurch gekennzeichnet, daß für das Feinraster m = 4 und n = 4 gewählt wird.

10. Verfahren nach einem der vorhergehenden Ansprüche, dadurch gekennzeichnet, daß m x n < i und in dem Bildwiederholspeicher in jedem Bildschirmraster-Bildpunkt-Speicherplatz ein Bit als Flaggenbit vorgesehen ist, mit dem angezeigt wird, ob der Speicherplatz eine das Feinraster des Bildschirmraster-Bildpunktes darstellende Bitfolge oder ausschließlich eine Kodierung der Farbe des Bildschirmraster-Bildpunktes enthält.

11. Verfahren nach einem der vorhergehenden Ansprüche, dadurch gekennzeichnet, daß bei einer Bittiefe von i = j + 1 + m x n, wobei j eine natürliche Zahl größer 1 ist, m x n Bit zur Speicherung des Feinrasters, ein Bit als Flaggenbit verwendet werden und die verbleibenden j Bit zur Kodierung der Farbe dienen, welche mit einer dem Grauwert entsprechenden Intensität in dem Bildschirmraster-Bildpunkt anzuzeigen ist.

12. Verfahren zur Text- und Graphikausgabe auf einem Druckgerät einer nach einem der vorhergehenden Ansprüche auf einem Bildschirmgerät erzeugten Text- und Graphikdarstellung, dadurch gekennzeichnet, daß die in dem Bilwiederholspeicher gespeicherte Information der auszugebenden Darstellung direkt, ohne Interpretation der Seitenbeschreibung und erneute Rasterung zur Steuerung des Druckgerätes verwendet wird.
